## Europäisches Patentamt

## European Patent Office

## Office européen des brevets

(11) Veröffentlichungsnummer: **0 303 166**
**A2**

# EUROPÄISCHE PATENTANMELDUNG

(21) Anmeldenummer: 88112594.2

(51) Int. Cl.⁴: **B29B 9/06**

(22) Anmeldetag: 03.08.88

(30) Priorität: 11.08.87 DE 3726606

(43) Veröffentlichungstag der Anmeldung:
15.02.89 Patentblatt 89/07

(84) Benannte Vertragsstaaten:
AT BE CH DE ES FR GB IT LI NL SE

(71) Anmelder: Hartig, Günter
Lerchenweg 1
D-6458 Rodenbach 2(DE)

(72) Erfinder: Hartig, Günter
Lerchenweg 1
D-6458 Rodenbach 2(DE)

(74) Vertreter: Schieferdecker, Lutz, Dipl.-Ing.
Herrnstrasse 37
D-6050 Offenbach am Main(DE)

(54) **Vorrichtung zum Abkühlen von Kunststoffsträngen.**

(57) Die Erfindung betrifft eine Vorrichtung zum Abkühlen von Kunststoffsträngen nach deren Austritt aus einer Extruderdüse. Eine solche Vorrichtung wird insbesondere bei der Herstellung von Kunststoffgranulat verwendet und weist ein über mindestens einer Wanne schwenkbar gelagertes Führungselement für die Kunststoffstränge auf. Das Führungselement ist mit einer Einrichtung zum Durchtrennen der Kunststoffstränge sowie mit einer Kühleinrichtung versehen, die aus mindestens einem Kühlwasserrohr mit Sprühdüsen besteht.

Die Erfindung liegt darin, daß das Führungselement um sein oberes Ende mit Hilfe einer nahe bei der Extruderdüse angeordneten, horizontalen Achse schwenkbar ist, daß das obere Ende des Führungselementes zu konstanter und ununterbrochener Aufnahme von Kunststoffsträngen nahe bei der Extruderdüse angeordnet ist, daß die Trenneinrichtung am unteren Ende des Führungselementes angeordnet ist und daß das Führungselement mit seinem unteren Ende in eine Position zur Abgabe von unbrauchbaren Kunststoffsträngen wie Ausschuß oder Anfahrmaterial in eine Abfallwanne oder in eine Position zur Übergabe der Kunststoffstränge an ein diese weiterführendes Teil verschwenkbar ist.

Fig. 1

## " Vorrichtung zum Abkühlen von Kunststoffsträngen "

Die Erfindung betrifft eine Vorrichtung zum Abkühlen von Kunststoffsträngen nach deren Austritt aus einer Extruderdüse. Eine solche Vorrichtung wird insbesondere bei der Herstellung von Kunststoffgranulat verwendet und weist ein über mindestens einer Wanne schwenkbar gelagertes Führungselement für die Kunststoffstränge auf. Das Führungselement ist mit einer Einrichtung zum Durchtrennen der Kunststoffstränge sowie mit einer Kühleinrichtung versehen, die aus mindestens einem Kühlwasserrohr mit Sprühdüsen besteht.

Eine derartige Vorrichtung ist beispielsweise aus der DE 31 45 613 bzw. aus der entsprechenden US 45 30 649 bekannt. Das Führungselement ist rinnenförmig und um sein unteres Ende aus einer senkrechten Lage derart in eine schrägstehende Lage verschwenkbar, daß die Kunststoffstränge in der schrägstehenden Lage auf das Führungselement fallen. Um zu vermeiden, daß die heißen, schmelzflüssigen Kunststoffstränge beim Verschwenken am oberen Ende des Führungselementes festkleben, muß entweder die Produktion unterbrochen werden oder es ist am oberen Ende des Führungselementes eine Stange oder ein Messer als Trenneinrichtung vorgesehen. Dennoch ist es schwierig, die bei Beginn des Produktionsvorganges aus der Extruderdüse austretenden, sehr heißen Kunststoffstränge derart exakt durchzutrennen und danach weiterzuführen, daß sich der Querschnitt der Stränge nicht verändert oder diese sogar an verschiedenen Stellen des Führungselementes ankleben, Klumpen bilden und zu Ausschuß führen. Insbesondere der Arbeitsbeginn ist daher meist problematisch.

Der Erfindung liegt die Aufgabe zugrunde, eine hinter bzw. unter einer Extruderdüse angeordnete Vorrichtung zum Abkühlen der Kunststoffstränge vorzusehen, die Unterbrechungen des Produktionsvorganges zuläßt, ohne daß beim erneuten Produktionsbeginn Probleme mit den sehr heißen, schmelzflüssigen Kunststoffsträngen entstehen.

Zur Lösung dieser Aufgabe sieht die Erfindung vor, daß das Führungselement um sein oberes Ende mit Hilfe einer nahe bei der Extruderdüse angeordneten, horizontalen Achse verschwenkbar ist, daß das obere Ende des Führungselementes zur konstanten und ununterbrochenen Aufnahme der heißen, schmelzflüssigen Kunststoffstränge nahe bei der Extruderdüse angeordnet ist, daß die Trenneinrichtung am unteren Ende des Führungselementes angeordnet ist und daß das Führungselement mit seinem unteren Ende in eine Position zur Abgabe von unbrauchbaren Kunststoffsträngen wie Ausschuß- oder Anfahrmaterial in eine Abfallwanne oder in eine Position zur Übergabe der Kunststoffstränge an ein diese weiterführendes Teil verschwenkbar ist.

Die Kunststoffstränge fließen von der Extruderdüse somit nicht mehr entweder unmittelbar in eine Abfallwanne oder zu der Vorrichtung zum Abkühlen, sondern sowohl brauchbare als auch nicht brauchbare Kunststoffstränge werden gemäß der Erfindung immer von der Extruderdüse in die Vorrichtung zum Abkühlen geführt. Wenn bei Produktionsbeginn die aus der Extruderdüse austretenden Kunststoffstränge noch nicht die gewünschte Form und Qualität besitzen, so werden sie durch das entsprechend verschwenkte Führungselement zur Abfallwanne gelenkt. Sobald die Kunststoffstränge jedoch qualitativ einwandfrei sind, wird das Führungselement in die Betriebsposition verschwenkt, so daß die Kunststoffstränge auf das sie weiterführende Teil gleiten und von dort schließlich zu der Schneidvorrichtung gelangen, in der sie zu Granulat zerschnitten werden.

Weitere Merkmale der Erfindung gehen aus Unteransprüchen im Zusammenhang mit der Zeichnung und der Beschreibung hervor.

Die Erfindung wird nachstehend anhand eines Ausführungsbeispieles, das in der Zeichnung dargestellt ist, näher beschrieben. Dabei zeigen:

Fig. 1: eine Prinzipskizze der Vorrichtung zum Abkühlen von Kunststoffsträngen in Seitenansicht;

Fig. 2: in Seitenansicht sowie größerem Maßstab das obere Ende des Führungselementes;

Fig. 3: in Seitenansicht und größerem Maßstab das untere Ende des Führungselementes;

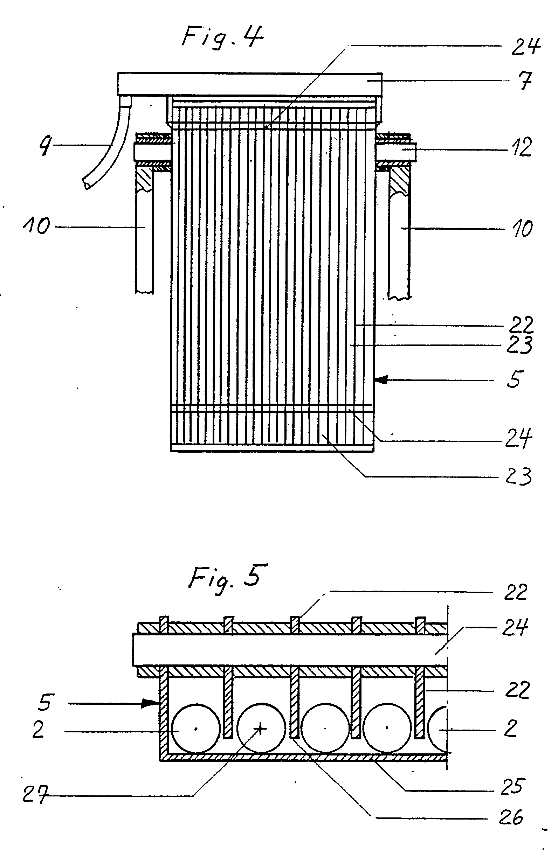

Fig. 4: eine Draufsicht auf das Führungselement und

Fig. 5: einen Schnitt längs der Linie V-V in Fig. 1 in größerem Maßstab.

Eine Vorrichtung 1 zum Abkühlen von Kunststoffsträngen 2, die in großer Anzahl nebeneinander aus einer Extruderdüse 3 im wesentlichen nach unten austreten, umfaßt ein unterhalb der Extruderdüse 3 angeordnetes Maschinengestell 4 mit einem Führungselement 5 für die Kunststoffstränge 2 und eine Kühleinrichtung 6 in Gestalt von mindestens einem Kühlwasserrohr 7 mit Sprühdüsen 8. Die Versorgung des bzw. der Kühlwasserrohre 7 erfolgt über eine Schlauch 9 und die Sprührichtung der Sprühdüsen 8 ist auf das Führungselement 5 bzw. auf die dort befindlichen Kunststoffstränge 2 gerichtet.

In einem Ständer 10 des Maschinengestelles 4 ist das Führungselement 5 um sein oberes Ende 11 mit Hilfe einer nahe bei der Extruderdüse 3 angeordneten, horizontalen Achse 12 schwenkbar gelagert. Hierdurch wird erreicht, daß aus der Extruderdüse 3 austretende Kunststoffstränge 2 immer, d.h. unabhängig von der Neigung des Führungselementes 5 auf dessen oberes Ende 11 auftreffen bzw. von diesem aufgefangen werden.

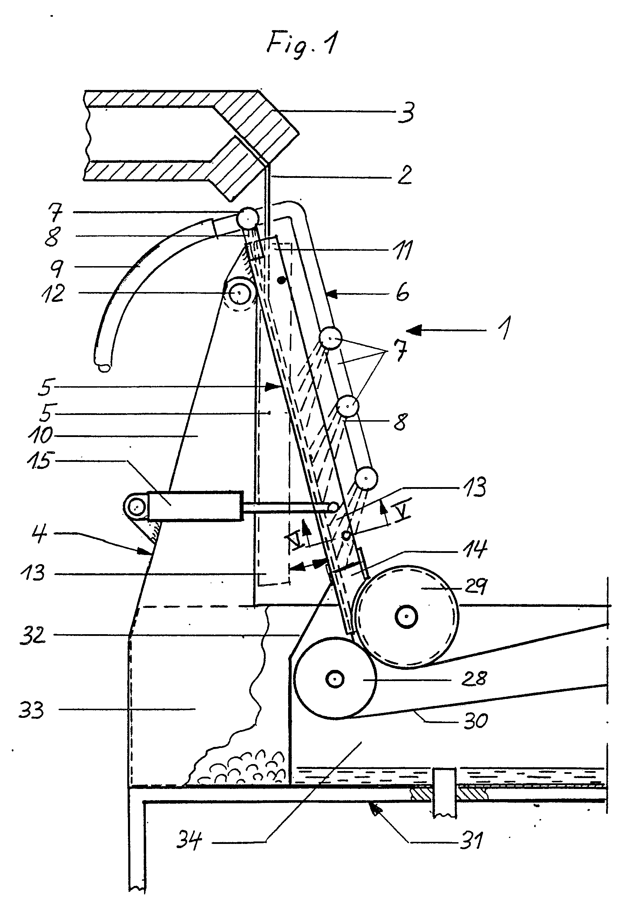

Das Führungselement 5 ist zusammen mit der Kühleinrichtung 6 aus einer senkrecht hängenden Position gemäß den gestrichelten Linien in Fig. 1 in eine geneigte Position verschwenkbar, in der sich sein unteres Ende 13 in einer fluchtenden Lage über einem die Kunststoffstränge 2 weiterführenden Teil 14 befindet. Zum Verschwenken dient eine Kolben-Zylindereinrichtung 15, die einerseits am Führungselement 5 und andererseits am Ständer 10 angelenkt ist.

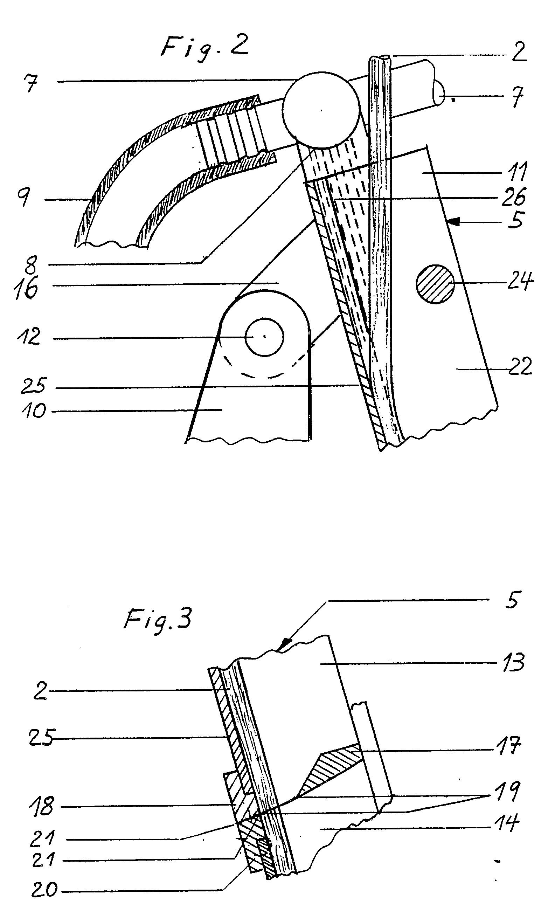

Im Querschnitt ist das Führungselement 5 vorzugsweise rinnenförmig. Seine oberes Ende 11 kann gemäß Fig. 2 mit Hilfe eines Distanzstückes 16 seitlich an der Achse 12 angeordnet sein. Am unteren Ende 13 des Führungselementes 5 befinden sich Trennelemente 17 und 18 mit Schneidkanten 19 und an dem die Kunststoffstränge 2 weiterführenden Teil 14 befindet sich ein Trennelement 20 mit zwei Schneidkanten 21 zum Durchtrennen der Kunststoffstränge 2 beim jeweiligen Verschwenken des Führungselementes 5.

Im Querschnitt ist das Führungselement 5 vorzugsweise rinnenförmig und mit parallelen Trennwänden 22 versehen, die Kanäle 23 zur Führung der Kunststoffstränge 2 bilden. Die Trennwände 22 sind in Trägern 24 über einem Boden 25 des Führungselementes 5 angeordnet und enden im Abstand über dem Boden 25, wie aus Fig. 5 hervorgeht. Die freien, bodenseitigen Ränder 26 der Trennwände 22 befinden sich unterhalb der Mitte 27 der Kunststoffstränge 2, so daß die Trennwände 22 von den Trägern 24 bis über die Mitte der Kunststoffstränge 27 reichen.

Das am unteren Ende 13 des Führungselementes 5 angeordnete, die Kunststoffstränge 2 weiterführende Teil 14 ist starr angeordnet und ebenso gestaltet wie das Führungselement 5. Es endet an Einzugswalzen 28, 29, die vorzugsweise unterschiedlichen Durchmesser besitzen und die Kunststoffstränge 2 auf eine nochmals weiterführende Einrichtung wie z.B. auch ein Förderband 30 lenken.

Unterhalb von dem Führungselement 5 und den Einzugswalzen 28, 29 befindet sich mindestens eine Wanne 31, die durch eine Trennwand 32 in eine reine Abfallwanne 33 und eine Auffangwanne 34 für die Kühlflüssigkeit unterteilt sein kann. In der senkrecht hängenden Position befindet sich das untere Ende 13 des Führungselementes 5 über der Abfallwanne 33, wie Fig. 1 zeigt.

## Ansprüche

1) Vorrichtung zum Abkühlen von Kunststoffsträngen nach deren Austritt aus einer Extruderdüse, insbesondere bei der Herstellung von Kunststoffgranulat, mit einem über mindestens einer Wanne schwenkbar gelagerten, die Kunststoffstränge aufnehmenden Führungselement mit einer Kühlwasserrohre und Sprühdüsen aufweisenden Kühleinrichtung sowie mit einer Einrichtung zum Durchtrennen der Kunststoffstränge, dadurch gekennzeichnet, daß das Führungselement (5) um sein oberes Ende (11) mit Hilfe einer nahe bei der Extruderdüse (3) angeordneten, horizontalen Achse (12) schwenkbar ist, daß das obere Ende (11) des Führungselementes (5) zu konstanter und ununterbrochener Aufnahme von Kunststoffsträngen (2) nahe bei der Extruderdüse (3) angeordnet ist, daß die Trenneinrichtung (17, 18) am unteren Ende (13) des Führungselementes (5) angeordnet ist und daß das Führungselement (5) mit seinem unteren Ende (13) in eine Position zur Abgabe von unbrauchbaren Kunststoffsträngen (2) wie Ausschuß oder Anfahrmaterial in eine Abfallwanne (33) oder in eine Position zur Übergabe der Kunststoffstränge (2) an ein diese weiterführendes Teil (14) verschwenkbar ist.

2) Vorrichtung nach Anspruch 1, dadurch gekennzeichnet, daß das am unteren Ende (13) des schwenkbaren Führungselementes (5) angeordnete Teil (14) ein starr angeordnetes Führungselement ist, das am Einlaufspalt von Einzugswalzen (28, 29) endet.

3) Vorrichtung nach Anspruch 1, dadurch gekennzeichnet, daß das Führungselement (5) einen Boden (25) und Kanäle (23) bildende Trennwände (22) aufweist, die parallel zueinander sowie mit ihren bodenseitigen Rändern (26) im Abstand vom Boden (25) angeordnet sind.

4) Vorrichtung nach Anspruch 1 - 3, dadurch gekennzeichnet, daß der Abstand der freien Ränder (26) bis zum Boden (25) geringer ist als der Abstand von der Mitte (27) der Kunststoffstränge (2) bis zum Boden (25) des Führungselementes (5).

Fig.1

Fig. 2

Fig. 3

EP 0 303 166 A2

Fig. 4

Fig. 5